(19) Europäisches Patentamt / European Patent Office / Office européen des brevets

(11) **EP 3 303 911 B1**

(12) **FASCICULE DE BREVET EUROPEEN**

(45) Date de publication et mention de la délivrance du brevet:
**08.04.2020  Bulletin 2020/15**

(21) Numéro de dépôt: **16727751.6**

(22) Date de dépôt: **10.05.2016**

(51) Int Cl.:
*F21S 43/14* (2018.01)      *F21S 43/27* (2018.01)
*F21S 43/237* (2018.01)     *F21S 43/245* (2018.01)
*F21V 8/00* (2006.01)

(86) Numéro de dépôt international:
**PCT/FR2016/051092**

(87) Numéro de publication internationale:
**WO 2016/193561 (08.12.2016 Gazette 2016/49)**

(54) **GUIDE DE LUMIÈRE POUR DISPOSITIF D'ÉCLAIRAGE OU DE SIGNALISATION DE VÉHICULE AUTOMOBILE**

LICHTLEITER FÜR KRAFTFAHRZEUGBELEUCHTUNGS- UND/ODER SIGNALISIERUNGSVORRICHTUNG

LIGHT GUIDE FOR MOTOR VEHICLE LIGHTING AND SIGNALLING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **05.06.2015  FR 1555158**

(43) Date de publication de la demande:
**11.04.2018  Bulletin 2018/15**

(73) Titulaire: **Renault S.A.S.**
**92100 Boulogne-Billancourt (FR)**

(72) Inventeurs:
• **BEN LETAIFA, Meriem**
  **75013 Paris (FR)**
• **LEONE, Sebastien**
  **78113 Condé Sur Vesgre (FR)**
• **BERNARD, Alexandre**
  **28300 Challet (FR)**

(56) Documents cités:
EP-A2- 2 068 068       DE-A1-102010 050 511
US-A1- 2003 169 997    US-A1- 2014 036 522

EP 3 303 911 B1

**Description**

DOMAINE TECHNIQUE AUQUEL SE RAPPORTE L'INVENTION

La présente invention concerne de manière générale le domaine de l'éclairage et de la signalisation des véhicules automobiles. Elle concerne notamment le domaine des phares et des feux de véhicules automobiles.

Elle concerne plus particulièrement un dispositif d'éclairage et/ou de signalisation pour véhicule automobile comportant :

- au moins une source lumineuse émettant un faisceau lumineux selon un axe moyen d'éclairage,
- un guide de lumière présentant une forme extrudée avec une extrémité d'entrée située dans l'axe moyen d'éclairage de la source de lumière, et deux faces latérales opposées, dont une face de réflexion pour réfléchir la lumière et une face de sortie pour la sortie de lumière,
- un support qui délimite un logement intérieur pour le guide de lumière et qui présente une paroi frontale dans laquelle est prévue une fenêtre,

la face de sortie du guide de lumière étant sensiblement plane et s'étendant parallèlement à la face externe de la paroi frontale du support.

ARRIERE-PLAN TECHNOLOGIQUE

Dans le domaine des phares de véhicules automobiles, on connaît différents types de dispositifs, parmi lesquels on trouve par exemple les feux de route, les feux de croisement, les feux de position, les feux de recul, les feux antibrouillards, les feux de changement de direction (ou « clignotants »), les feux stop, les feux de jour...

Généralement, chaque feu comporte une ou plusieurs source(s) de lumière, telle(s) qu'une ampoule ou une diode électroluminescente.

Il est en outre connu d'utiliser un ou plusieurs guides de lumière pour propager le faisceau lumineux issu de chaque source de lumière. Ce guide de lumière peut par exemple longer tout ou partie de la glace ou des éléments intérieurs du projecteur ou du feu, de manière à former un trait de lumière.

Le document DE102010050511 divulgue un dispositif d'éclairage comprenant une source de lumière, un guide de lumière, et une pièce de support pour le guide de lumière. Le guide de lumière comprend une surface d'entrée de lumière agencée dans une zone d'émission de la source de lumière, et une sortie de lumière.

Le document EP2068068 divulgue un phare de véhicule comprenant un module source de lumière comprenant une plaque de guidage de lumière ayant une surface d'émission de lumière sur une face, et une source de lumière ponctuelle ou linéaire opposée à une face d'extrémité de la plaque de guidage de lumière, la plaque de guidage de lumière étant faite d'un matériau en forme de plaque, transparent dans la région de lumière visible ; et une lentille de projection convexe.

Le document US2003/0169997 divulgue un guide de lumière cylindrique ayant deux portions s'étendant longitudinalement avec des sections transversales de formes différentes.

Le document US2014/0036522 divulgue un guide de lumière cylindrique avec des éléments réfléchissant avec une surface courbée sur une portion de surface arrière du guide de lumière.

Un guide de lumière comporte généralement un corps allongé cylindrique en matière transparente. La source de lumière est alors placée à proximité de l'une des extrémités du guide de lumière, de telle sorte que les rayons lumineux émis par cette source se propagent par réflexion totale dans la longueur du guide en direction de son extrémité opposée. Des éléments réfléchissants, tels que des prismes, sont prévus le long d'un des côtés du guide de lumière de manière à réfléchir une partie de la lumière sur le côté opposé du guide, de telle sorte que celui-ci s'illumine non seulement sur son extrémité opposée à la source de lumière, mais également sur une partie au moins de sa longueur.

Un tel guide de lumière est généralement fixé dans le châssis du feu au moyen d'un support en deux parties, dont un socle arrière et un masque avant qui délimite une fenêtre. Le côté du guide par lequel sort la lumière est alors positionné de manière qu'il émerge au travers de cette fenêtre pour être visible depuis l'extérieur.

Compte tenu de la forme cylindrique du guide de lumière, on constate généralement qu'il existe un jeu entre les bords de la fenêtre et le guide de lumière, provoquant des fuites de lumière et des points chauds, ce qui dégrade l'aspect du dispositif (que ce dernier soit allumé ou éteint).

OBJET DE L'INVENTION

Afin de remédier aux inconvénients précités de l'état de la technique, la présente invention propose un dispositif de forme particulière.

Plus particulièrement, on propose selon l'invention un dispositif d'éclairage et/ou de signalisation tel que défini dans l'introduction, dans lequel la face de sortie du guide de lumière est bordée de deux flancs plats formant chacun un angle obtus avec la face de sortie et dans lequel la fenêtre présente deux bords latéraux qui s'étendent dans des plans inclinés vers le logement intérieur parallèlement aux flancs du guide de lumière.

Ainsi, grâce à l'invention, il est plus aisé de faire en sorte que le jeu entre les bords de la fenêtre et les côtés de la face de sortie du guide de lumière soit réduit, ce qui évite les fuites de lumière et l'apparition de points chauds, et améliore alors l'aspect du dispositif, que ce dernier soit allumé ou éteint.

D'autres caractéristiques avantageuses et non limitatives du dispositif d'éclairage et/ou de signalisation sont les suivantes :

- le guide de lumière est logé dans le support de telle sorte que sa face de sortie émerge à affleurement de la fenêtre du support ;

- ladite face de réflexion présente des surfaces optiques ou un traitement surfacique pour réfléchir la lumière ;

- il est prévu deux nervures qui longent la face de sortie, et qui s'étendent de part et d'autre de cette face de sortie, à distance de celle-ci ;

- le support est formé de deux parties assemblées, dont un socle arrière et un masque avant qui délimite ladite fenêtre.

L'invention porté également sur un véhicule automobile équipé d'au moins un dispositif d'éclairage et/ou de signalisation tel que précité.

DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :

- la figure 1 est une vue schématique d'un guide de lumière et de la source lumineuse qui lui est associée ;
- la figure 2 est une vue schématique d'une coupe longitudinale d'une partie du guide de lumière de la figure 1 ;
- les figures 3 et 4 sont des vues schématiques en coupe transversale de deux variantes de réalisation du guide de lumière de la figure 1 et du socle qui le loge.

En préliminaire, on notera que les éléments identiques ou similaires des différentes variantes de réalisation de l'invention représentées sur les différentes figures seront, dans la mesure du possible, référencés par les mêmes signes de référence et ne seront pas décrits à chaque fois.

Un véhicule automobile est généralement équipé de différents feux, notamment de feux de route, de feux de croisement, de feux de position, de feux de recul, de feux antibrouillards, de feux de changement de direction (ou « clignotants »), de feux stop et de feux de jour (ou « feux de circulation diurne »).

On pourra ici, à titre d'exemple illustratif, s'intéresser plus particulièrement aux feux de position.

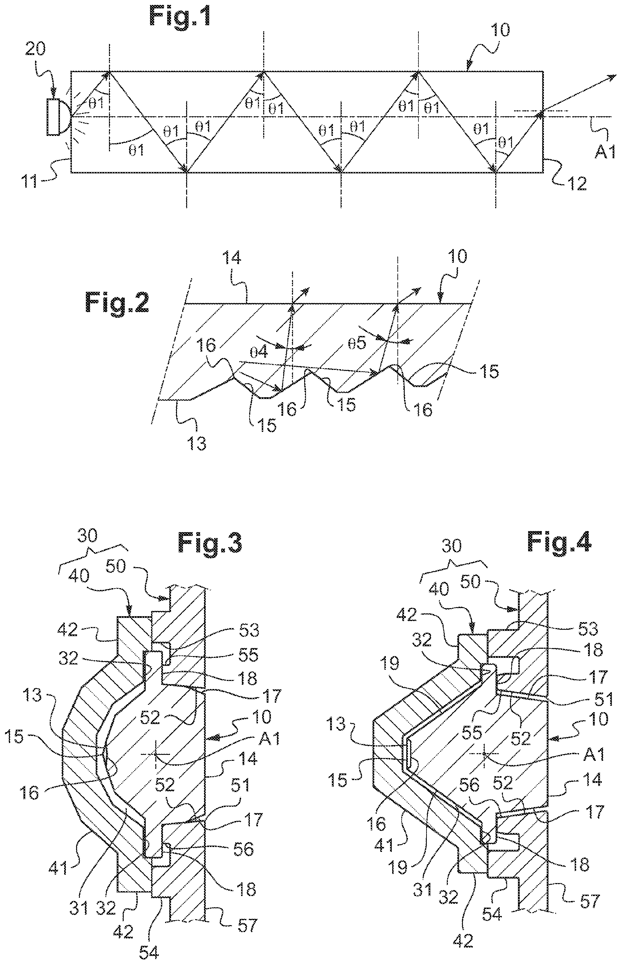

Chaque feu de position comporte un dispositif de signalisation comportant une source lumineuse 20 émettant un faisceau lumineux selon un axe moyen d'éclairage A1 (voir figure 1), un guide de lumière 10 permettant de guider une partie de ce faisceau lumineux dans une direction donnée, et un support 30 qui délimite un logement intérieur 31 pour le guide de lumière 10 et qui présente au moins une fenêtre 51 pour la sortie d'une partie au moins du faisceau lumineux vers l'extérieur (voir figures 3 et 4).

Le guide de lumière 10 est alors conçu pour guider la lumière depuis la source lumineuse 20 jusqu'à cette fenêtre 51. Il est à cet effet prévu pour diffuser la lumière sur une partie au moins de sa longueur.

Ce guide de lumière 10 est réalisé dans un matériau transparent, tel que par exemple le Polyméthacrylate de méthyle (plus connu sous son abrégé « PMMA »), dont l'indice de réfraction n est égal à 1,492, ou le polycarbonate, dont l'indice de réfraction n est égal à 1,584.

Comme le montre la figure 1, il présente une forme extrudée selon une courbe. Dans l'exemple représenté, il présente plus précisément une forme allongée le long d'un axe, ici l'axe moyen d'éclairage A1. Ainsi, il peut être parfaitement rectiligne ou présenter une forme légèrement courbée. On considérera ici le cas où le guide de lumière 10 présente une forme parfaitement rectiligne. Il s'étend alors selon un axe moyen, confondu avec l'axe moyen d'éclairage A1.

Il présente une extrémité d'entrée 11 pour l'entrée de la lumière issue de la source lumineuse 20. Cette extrémité d'entrée 11 est plane et s'étend dans un plan perpendiculaire à l'axe moyen d'éclairage A1.

Il présente une seconde extrémité 12, située à l'opposé de l'extrémité d'entrée 11, qui est plane et qui s'étend ici également dans un plan perpendiculaire à l'axe moyen d'éclairage A1.

Il présente enfin une surface latérale, dont on peut distinguer deux côtés opposés, à savoir une face de réflexion 13 et une face de sortie 14 (voir figure 2).

Pour comprendre le fonctionnement d'un tel guide de lumière 10, on peut se référer à la figure 1.

Ce guide de lumière 10 utilise le principe de la réflexion totale dans un matériau transparent. Ce principe s'explique de la manière suivante.

La loi de Snell-Descartes a montré qu'un rayon lumineux incident, lorsqu'il arrive à une interface entre deux milieux transparents (ici, la surface latérale du guide de lumière), présente une partie qui se réfléchit sur cette interface et une partie qui traverse cette interface en étant dévié (on dit du rayon qu'il est réfracté). Lorsque l'angle θ1 entre le rayon lumineux incident et la normale à l'interface est supérieur à un angle critique, on constate toutefois que le rayon lumineux se réfléchit complètement et qu'il n'y a plus de réfraction, ce qu'énonce la formule suivante :

Si $\theta 1 > \arcsin(\frac{1}{n})$, alors le rayon lumineux considéré ne se réfracte pas. On parle alors de réflexion totale.

Lorsque l'on souhaite qu'une partie des rayons lumineux traversant le guide de lumière 10 sorte du guide par sa surface latérale, on peut prévoir, par exemple, de placer des prismes à l'intérieur du guide de lumière.

Alors, comme le montre la figure 2, la face de réflexion 13 du guide de lumière 10 présente ici une succession de prismes 15.

Ces prismes 15 sont ici placés côte-à-côte selon l'axe moyen d'éclairage A1, et sont répartis sur la majeure partie de la longueur du guide de lumière 10.

Chaque prisme 15 présente une section en forme de dièdre, avec deux facettes inclinées qui se rejoignent au niveau d'un sommet 16 rectiligne.

Ici, les deux facettes de chaque prisme 15 sont symétriques par rapport à un plan orthogonal à l'axe moyen d'éclairage A1, de sorte que le guide de lumière 10 est dit «à prismes symétriques ». En variante, il pourrait en être autrement.

Comme le montre la figure 2, ces prismes 15 sont ainsi placés de telle manière qu'ils réfléchissent une partie des rayons lumineux issus de la source de lumière 20 vers la face de sortie 14, avec un angle d'incidence θ4, θ5 tel que ces rayons lumineux se réfractent et sortent du guide de lumière. Ainsi le guide de lumière émet principalement de la lumière par sa face de sortie 14.

En variante, pour réfléchir la lumière vers la face de sortie 14, la face de réflexion 13 pourrait présenter une forme différente. Elle pourrait notamment s'étendre sensiblement dans un plan et présenter un traitement surfacique pour réfléchir la lumière.

Comme le montrent les deux variantes illustrées sur les figures 3 et 4, selon une caractéristique particulièrement avantageuse de l'invention, la face de sortie 14 est sensiblement plane et s'étend parallèlement à la face externe 57 de la paroi frontale du support 30 qui accueille le guide de lumière.

Dans la variante non représentée où le guide de lumière serait légèrement courbé, la face de sortie serait également légèrement courbée et s'étendrait en continuité de tangente à la paroi frontale du support 30.

On pourrait prévoir que le guide de lumière présente une forme parallélépipédique.

On préférera toutefois qu'il présente une forme différente, illustrée dans les deux variantes de réalisation de l'invention représentées sur les figures 3 et 4.

Dans ces deux variantes, la face de sortie 14 est parfaitement plane et elle est bordée de deux flancs 17 plats, qui forment chacun un angle obtus avec la face de sortie 14.

Le guide de lumière 10 est par ailleurs ici flanqué de deux nervures 18 qui longent la face de sortie 14, et qui s'étendent de part et d'autre de cette face de sortie 14, à distance de celle-ci.

On observe, dans la variante de réalisation de l'invention représentée sur la figure 3, que le guide de lumière 10 présente une forme globale de demi-cylindre.

Les deux nervures 18 s'étendent ici à l'arrière des deux flancs 17 et à distance de ceux-ci, dans un plan moyen passant par l'axe moyen d'éclairage A1.

Dans la variante de réalisation de l'invention représentée sur la figure 4, le guide de lumière 10 présente une section transversale de forme polygonale.

Il présente ainsi, à l'arrière de la face de sortie 14, les deux flancs 17. Ces deux flancs 17 s'étendent entre les bords longitudinaux de cette face de sortie et les deux nervures 18. Il présente par ailleurs, à l'arrière de ces deux nervures 18, deux autres flancs 19 qui s'étendent entre les deux nervures 18 et les bords longitudinaux de la face de réflexion 13 qui est plane et qui peut être parallèle à la face de sortie 14.

La source de lumière 20, représentée sur la figure 1, est ici une diode électroluminescente placée de telle manière par rapport au guide de lumière que son axe moyen d'éclairage A1 se confond avec l'axe longitudinal central du guide de lumière 10.

En variante, il pourrait s'agir d'un autre type de source de lumière.

Le support 30, qui est représenté sur les figures 3 et 4 et dont on rappelle qu'il délimite un logement intérieur 31 et qu'il présente au moins une fenêtre 51, loge le guide de lumière 10 de telle manière que la face de sortie 14 de ce guide émerge à affleurement de la fenêtre 51.

Ainsi, la face de sortie 14 du guide de lumière 10 se trouve sensiblement à la hauteur de la face avant du support 30, ce qui confère un aspect esthétique à l'ensemble.

Ce support 30 est formé de deux parties assemblées, à savoir d'un socle arrière 40 et d'un masque avant 50 qui délimite ladite fenêtre 51.

Comme le montrent les figures 3 et 4, le socle arrière 40 se présente sous la forme d'un volume extrudé qui présente, le long de son axe central, une gouttière 41 profilée dont la forme est sensiblement identique, en négatif, à celle de la partie arrière correspondante du guide de lumière 10. Cette gouttière 41 est alors bordée de deux rebords plats 42 (ces rebords pourraient présenter des formes différentes).

Dans la variante de réalisation de l'invention représentée sur la figure 3, la gouttière 41 présente une section transversale en forme d'arc-de-cercle.

Dans la variante de réalisation de l'invention représentée sur la figure 4, la gouttière 41 présente une paroi de fond plane, bordée de deux parois planes inclinées par rapport à la paroi de fond.

Comme le montrent les figures 3 et 4, le masque avant 50 se présente sous la forme d'un volume extrudé présentant en son centre une ouverture qui est extrudée selon l'axe moyen d'éclairage A1 et qui forme la fenêtre 51. Ce masque avant 50 est réalisé dans en matériau opaque.

Les deux bords longitudinaux 52 qui délimitent latéralement cette fenêtre 51 s'étendent dans des plans inclinés par rapport à la face avant du masque avant 50, vers le logement intérieur 31. Ces deux bords longitudinaux 52 permettent donc d'éviter toute fuite de lumière entre le guide de lumière et le bord de la fenêtre 51.

Selon l'invention, comme le montre la figure 4, ces bords longitudinaux 52 s'étendent dans des plans parallèles aux flancs 17 du guide de lumière 10, ce qui assure un bon ajustement du guide de lumière 10 par rapport à la fenêtre 51, avec un jeu réduit, et moins de points chauds.

Comme le montrent les figures 3 et 4, le masque avant 50 présente, en saillie sur sa face arrière, quatre nervures 53, 54, 55, 56 qui s'étendent parallèlement à l'axe moyen d'éclairage A1.

Deux premières nervures 55, 56 identiques bordent la fenêtre 51, tandis que deux secondes nervures 53, 54 identiques s'étendent de part et d'autre des premières nervures 55, 56.

Ces deux secondes nervures 53, 54 forment des appuis sur lesquels viennent s'appuyer les rebords plats 42 du socle arrière 40. Le socle arrière 40 peut alors être fixé au masque avant 50 par différents moyens d'assemblage (collage, clippage, vissage, soudure...) au niveau de ces appuis.

Les deux premières nervures 55, 56 présentent quant à elles des hauteurs réduites par rapport à celles des secondes nervures 53, 54. Elles délimitent ainsi, avec les rebords plats 42 du socle arrière 40, deux gorges 32 de réception des deux nervures 18 du guide de lumière 10. Préférentiellement, les rebords plats 42 du socle arrière 40 présentent chacun un renfoncement en creux dans lequel vient se loger une partie de chaque nervure 18.

De cette manière, les deux gorges 32 situées à la jonction entre le masque avant 50 sur le socle arrière 40 permettent de bloquer le guide de lumière 10 dans le support 30 à la faveur de l'assemblage des deux parties formant le support 30.

La présente invention n'est nullement limitée au mode de réalisation décrit et représenté.

En particulier, le dispositif pourra être appliqué à un autre type d'éclairage du véhicule, par exemple, à l'éclairage intérieur (ambiance lumineuse).

**Revendications**

1. Dispositif d'éclairage et/ou de signalisation pour véhicule automobile comportant :

   - au moins une source lumineuse (20) émettant un faisceau lumineux selon un axe moyen d'éclairage (A1),
   - un guide de lumière (10) présentant une forme extrudée avec une extrémité d'entrée (11) située dans l'axe moyen d'éclairage (A1) de la source de lumière (20), et deux faces latérales (13, 14) opposées, dont une face de réflexion (13) pour réfléchir la lumière et une face de sortie (14) pour la sortie de lumière,
   - un support (30) qui délimite un logement intérieur (31) pour le guide de lumière (10) et qui présente une paroi frontale dans laquelle est prévue une fenêtre (51),

   la face de sortie (14) du guide de lumière (10) étant sensiblement plane et s'étendant parallèlement à la face externe (57) de la paroi frontale du support (30), **caractérisé en ce que** la face de sortie (14) du guide de lumière (10) est bordée de deux flancs (17) plats formant chacun un angle obtus avec la face de sortie (14), et **en ce que** la fenêtre (51) présente deux bords latéraux (52) qui s'étendent dans des plans inclinés vers le logement intérieur (31) parallèlement aux flancs (17).

2. Dispositif d'éclairage et/ou de signalisation selon la revendication précédente, dans lequel le guide de lumière (10) est logé dans le support (30) de telle sorte que sa face de sortie (14) émerge à affleurement de la fenêtre (51) du support (30).

3. Dispositif d'éclairage et/ou de signalisation selon l'une des revendications précédentes, dans lequel ladite face de réflexion (13) présente des surfaces optiques (15) ou un traitement surfacique pour réfléchir la lumière.

4. Dispositif d'éclairage et/ou de signalisation selon l'une des revendications précédentes, dans lequel il est prévu deux nervures (18) qui longent la face de sortie (14), et qui s'étendent de part et d'autre de cette face de sortie (14), à distance de celle-ci.

5. Dispositif d'éclairage et/ou de signalisation selon l'une des revendications précédentes, dans lequel le support (30) est formé de deux parties assemblées, dont un socle arrière (40) et un masque avant (50) qui délimite ladite fenêtre (51).

6. Véhicule automobile, **caractérisé en ce qu'**il est équipé d'au moins un dispositif d'éclairage et/ou de signalisation selon l'une quelconque des revendications précédentes.

**Patentansprüche**

1. Beleuchtungs- und/oder Signalisierungsvorrichtung für ein Kraftfahrzeug, aufweisend:

   - mindestens eine Lichtquelle (20), die ein Lichtbündel entlang einer mittleren Beleuchtungsachse (A1) emittiert,
   - einen Lichtleiter (10), der eine extrudierte Form aufweist, mit einem Einlassende (11), das sich in der mittleren Beleuchtungsachse (A1) der Lichtquelle (20) befindet, und zwei gegenüberliegenden Seitenflächen (13, 14), davon eine Reflexionsfläche (13), um das Licht zu reflektieren, und eine Austrittsfläche (14) für den Austritt des Lichts,

- einen Träger (30), der eine Innenaufnahme (31) für den Lichtleiter (10) begrenzt und der eine Vorderwand aufweist, in der ein Fenster (51) vorgesehen ist, wobei die Austrittsfläche (14) des Lichtleiters (10) im Wesentlichen eben ist und sich parallel zur Außenseite (57) der Vorderwand des Trägers (30) erstreckt,

**dadurch gekennzeichnet, dass** die Austrittsfläche (14) des Lichtleiters (10) von zwei flachen Flanken (17) eingefasst ist, die jeweils einen stumpfen Winkel mit der Austrittsfläche (14) bilden, und dadurch, dass das Fenster (51) zwei Seitenränder (52) aufweist, die sich in den geneigten Ebenen zu der Innenaufnahme (31) parallel zu den Flanken (17) erstrecken.

2. Beleuchtungs- und/oder Signalisierungsvorrichtung nach dem vorhergehenden Anspruch, wobei der Lichtleiter (10) so in dem Träger (30) aufgenommen ist, dass seine Austrittsfläche (14) bündig aus dem Fenster (51) des Trägers (30) hervortritt.

3. Beleuchtungs- und/oder Signalisierungsvorrichtung nach einem der vorhergehenden Ansprüche, wobei die Reflexionsfläche (13) optische Flächen (15) oder eine Oberflächenbehandlung aufweist, um das Licht zu reflektieren.

4. Beleuchtungs- und/oder Signalisierungsvorrichtung nach einem der vorhergehenden Ansprüche, wobei zwei Rippen (18) vorgesehen sind, die die Austrittsfläche (14) entlanglaufen und die sich beiderseits dieser Austrittsfläche (14) in einem Abstand von dieser erstrecken.

5. Beleuchtungs- und/oder Signalisierungsvorrichtung nach einem der vorhergehenden Ansprüche, wobei der Träger (30) von zwei zusammengesetzten Abschnitten gebildet ist, davon ein hinterer Sockel (40) und eine vordere Maske (50), die das Fenster (51) begrenzt.

6. Kraftfahrzeug, **dadurch gekennzeichnet, dass** es mit mindestens einer Beleuchtungs- und/oder Signalisierungsvorrichtung nach einem der vorhergehenden Ansprüche ausgerüstet ist.

**Claims**

1. Lighting and/or signalling device for a motor vehicle comprising:

- at least one light source (20) emitting a light beam along a mean lighting axis (A1),
- a light guide (10) having an extruded form with an input end (11) situated in the mean lighting axis (A1) of the light source (20), and two opposing lateral faces (13, 14), of which one is a reflection face (13) for reflecting the light and one is an output face (14) for the output of light,
- a support (30) which delimits an internal housing (31) for the light guide (10) and which has a front-end wall in which there is provided a window (51), the output face (14) of the light guide (10) being substantially planar and extending parallel to the outer face (57) of the front-end wall of the support (30),

**characterized in that** the output face (14) of the light guide (10) is bordered by two flat flanks (17) each forming an obtuse angle with the output face (14), and **in that** the window (51) has two lateral edges (52) which extend in inclined planes towards the internal housing (31) parallel to the flanks (17).

2. Lighting and/or signalling device according to the preceding claim, wherein the light guide (10) is housed in the support (30) in such a way that its output face (14) emerges flush with the window (51) of the support (30).

3. Lighting and/or signalling device according to one of the preceding claims, wherein said reflection face (13) has optical surfaces (15) or a surface treatment for reflecting the light.

4. Lighting and/or signalling device according to one of the preceding claims, wherein two ribs (18) are provided which run along the output face (14), and which extend on either side of this output face (14), at a distance therefrom.

5. Lighting and/or signalling device according to one of the preceding claims, wherein the support (30) is formed by two joined parts, of which one is a rear base (40) and one is a front mask (50) which delimits said window (51).

6. Motor vehicle, **characterized in that** it is equipped with at least one lighting and/or signalling device according to any one of the preceding claims.

## Fig.1

## Fig.2

## Fig.3

## Fig.4

## RÉFÉRENCES CITÉES DANS LA DESCRIPTION

### Documents brevets cités dans la description

- DE 102010050511
- EP 2068068 A
- US 20030169997 A
- US 20140036522 A